# EUROPEAN PATENT SPECIFICATION

(11) **EP 0 369 680 B1**
(45) Date of publication and mention of the grant of the patent: **11.01.1995**
(21) Application number: 89311607.9
(22) Date of filing: 09.11.1989
(51) Int. Cl.: B60J 1/17, E05F 11/52

(54) **Window regulator mechanism with kick-out feature**
Fensterheber mit Rückstelleinrichtung
Mécanisme de manoeuvre de lève-vitre avec dispositif de rappel

(30) Priority: 17.11.1988 US 272639
(43) Date of publication of application: 23.05.1990
(73) Proprietor: EXCEL INDUSTRIES INC, Elkhart, Indiana 46514 (US)
(72) Inventor: Kracht, Thomas Frank, St. Clair Shores Michigan (US); Lawrence, Jeffrey Stephen, Warren Michigan 48092 (US)
(74) Representative: Senior, Alan Murray

(56) References cited:
- FR-A- 2 242 550
- FR-A- 2 279 581

## Description

### BACKGROUND AND SUMMARY OF THE INVENTION

This invention relates generally to a window regulator mechanism for a motor vehicle and more particularly to a dual drive window regulator mechanism which includes a kick-out feature to move the lower edge of the window glass outward as the glass reaches the raised position closing the window opening.

As automobile designs become more aerodynamic, vehicle designers are incorporating "four-side flush glass" in vehicle windows. In "four-side flush glass", the window glass is flush with the vehicle exterior along all four sides of the glass. In the past, vehicle side door windows have been constructed with window glass that slides in a guide channel extending from a window storage cavity beneath the window opening upward along the periphery of the window opening. When the glass is in the raised position closing the window opening, the exterior surface of the glass is recessed relative to the exterior surface of the vehicle door.

The window opening and glass guidance system with four-side flush glass is designed such that as the glass is raised to the upper position, the upper edge of the glass contacts and seals against the upper edge of the window opening flush with the vehicle exterior along the upper edge of the window opening. The difficulty, however, is with positioning of the lower edge of the glass flush to the vehicle exterior.

In order to lower the window into a storage cavity beneath the window opening, it is necessary for the door assembly to have an opening along the sill at the bottom edge of the window opening to allow the glass to move downward into the storage cavity. This opening into the storage cavity by necessity is inboard of the outer surface of the door.

In order to position the lower edge of the glass flush with the vehicle exterior, it is necessary to move the lower edge of the glass outward into a position flush with the vehicle door exterior. Such movement of the glass is not possible if the glass edges are contained in U-shaped glass guide channels. Previous kick-out mechanisms have relied on arms attached to the glass which are guided within guide channels to provide the required displacement. A separated window regulator is provided for raising and lowering the glass. The regulator had to have additional components to allow the regulator to follow this outward travel of the glass. The result is additional components and weight in the vehicle door assembly.

GB-A-1 468 774 (or FR-A-2 279 581) discloses a window regulator mechanism in accordance with the prior art portion of claim 1. With this prior construction, guide channels are provided at the top and bottom of the window space bodily laterally to displace the top and bottom of the glass window to fit flush into its aperture, such movement being accompanied by simultaneous lateral movement of the upper part of the lifting mechanism.

The present invention provides a simple glass guidance system having a window regulator mechanism which incorporates the glass guidance system into the regulator system thereby eliminating the need for separate glass guide channels. It achieves this by appreciating the possibility of simply rotating the glass about its upper edge to cause flush fitting of its lower edge to the aperture, the drive for this rotation being obtainable from the same drive as causes lifting of the glass to its closed position, but without need to displace the lifting drive itself and without a complicated rotary pusher cam lever as used in GB-A-1 468 774.

Thus, the present invention as defined in claim 1 provides a window regulator mechanism having a kick-out mechanism which does not require use of a separate glass guide system and which operates in a very simple and positive manner, using guide means to move the bottom of the window laterally as the glass is moved into the upper closed position.

The window regulator mechanism of this invention includes a dual drive system which drives the window glass at two points, one at the forward edge of the glass and the other at the rearward edge of the glass. The glass in the later illustrated embodiment is driven by translating racks contained within stationary tracks. The regulator includes two racks, one connected to each drive point on the glass. Each track has a longitudinal slot along one side providing access to evenly spaced transverse teeth in the rack. The teeth of a drive pinion extend through the slots in the track and engage the teeth of the rack. As the pinion is rotated, the racks are simultaneously moved within the tracks to raise or lower the glass depending on the direction of rotation of the pinion. A mounting flange attached to the end of the rack in each track is used to connect the rack to the glass at the drive point.

In one embodiment, the attachment of the mounting flange to the glass includes a pair of sliding blocks. The mounting flange is attached to a lower dovetail sliding block which includes a dovetail shaped mortise along its upper surface. An upper dovetail block, having a corresponding dovetail tenon, is positioned above the lower block with the tenon engaged with the mortise. The mortise and tenon extend side-to-side relative to the vehicle door to allow the upper block to move outward as the glass is raised. A pin extending from the upper dovetail block engages a slotted cam as the glass approaches its upper position. The slotted cam urges the upper dovetail block outward moving the lower edge of the window glass flush with the vehicle exterior along the lower edge of the window opening.

In a second embodiment, the slotted cam is replaced with an inclined wedge which engages the upper dovetail block and urges it outward as the glass approaches the raised position.

In a third embodiment, a push rod extends inwardly from the glass through a rod guide attached to the mounting flange. A button is attached to the opposite end of the push rod by a ball and socket joint. The button has an annular groove around its periphery which engages a guide rail positioned generally parallel to the track. The upper end of the guide rail is inclined outward such that as the glass is raised, the button follows the incline in the guide rail and moves outward, thereby sliding the push rod through the rod guide, pushing the lower edge of the glass outward into a flush relationship with the door exterior surface.

Further objects, features and advantages of the invention will become apparent from a consideration of the following description and the appended claims when taken in connection with the accompanying drawings.

### BRIEF DESCRIPTION OF THE DRAWINGS

Figure 1 is a perspective view of a vehicle door assembly having a drive window regulator mechanism with a kick-out mechanism;
Figure 2 is a elevational view of a window kick-out mechanism;
Figure 3 is a sectional view as seen from substantially the line 3-3 of Figure 2;
Figure 4 is a view similar to Figure 3 with the glass in a lowered position;
Figure 5 is a sectional view as seen from substantially the line 5-5 of Figure 4;
Figure 6 is a view similar to Figures 3 and 4 of a second embodiment of the kick-out mechanism;
Figure 7 is a sectional view similar to Figures 3 and 4 of a third embodiment of the kick-out mechanism;
Figure 8 is a elevational view of the kick-out mechanism of Figure 7; and
Figure 9 is a sectional view as seen from substantially the line 9-9 of Figure 8.

### DESCRIPTION OF THE PREFERRED EMBODIMENT

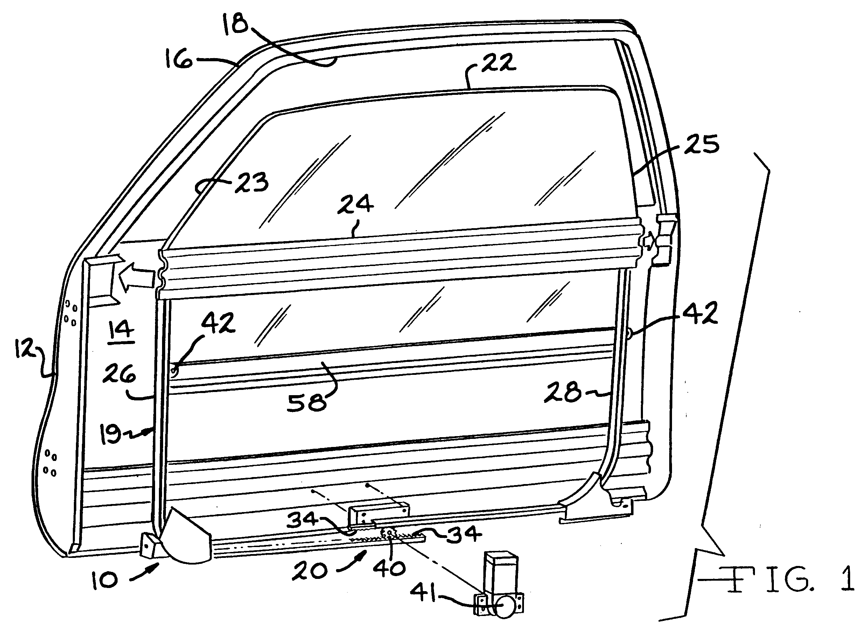

The dual drive window regulator mechanism of this invention, indicated generally at 20, is shown in Figure 1 assembled in a vehicle door assembly 10. The door assembly includes a door skin 12 having an outer sheet metal panel 14, the outer surface of which defines the exterior surface of the door. The door skin also includes a window frame 16 which defines a window opening 18.

As shown in Figure 1, the door assembly 10 also includes a functional door cartridge 19 comprised of the window regulator mechanism 20, window glass 22 and cross member 24 being inserted into the door skin 12. It is to be understood that the regulator mechanism of this invention is not limited to use in a vehicle door assembly constructed with a functional door cartridge but can be used in conventional vehicle door assemblies.

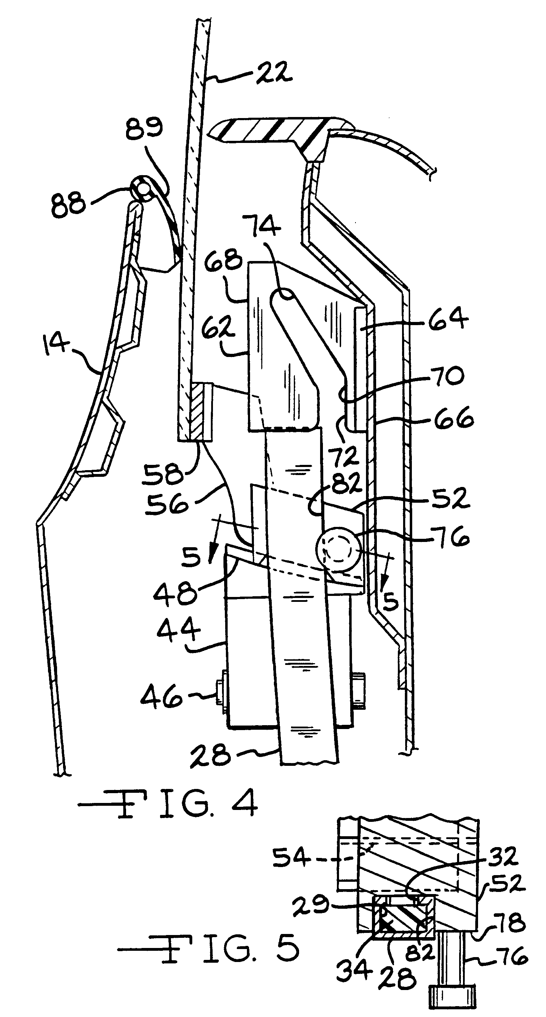

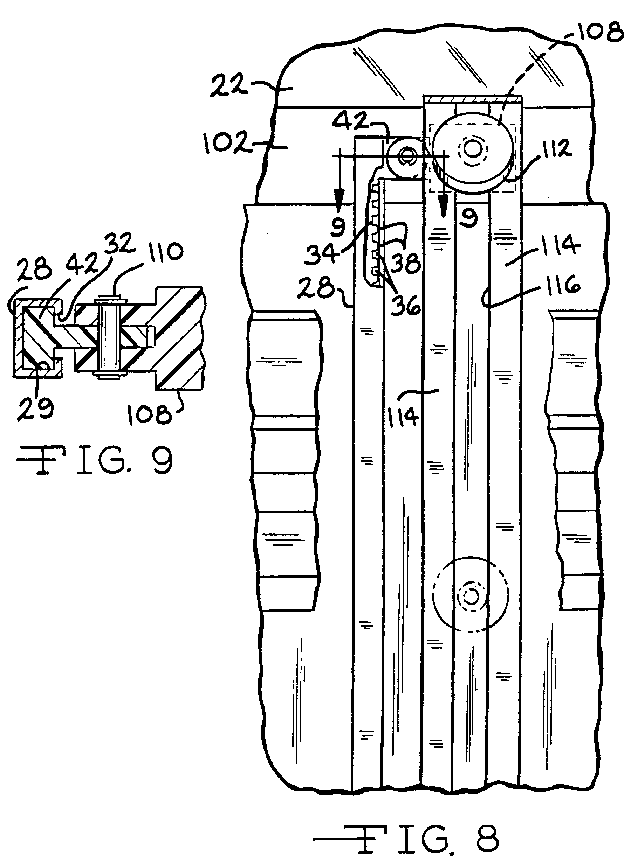

The window regulator mechanism 20 includes a forward track 26 and a rearward track 28 which extend vertically at the forward and rearward edges 23 and 25 respectively, of the glass 22. The tracks 26 and 28 curve and extend horizontally along the lower edge of the door assembly. The two tracks 26 and 28 are hollow and define a generally rectangular shaped inner surface 29 shown in Figures 5 and 9. A slot 32 extends lengthwise of the tracks 26 and 28 also shown in Figures 5 and 9. The slot 32 in the two tracks 26 and 28 are facing rearward relative to the vehicle, to the right in Figure 1. At the lower portion of the door assembly, where the two tracks are generally horizontal, the slots 32 in the two tracks face one another.

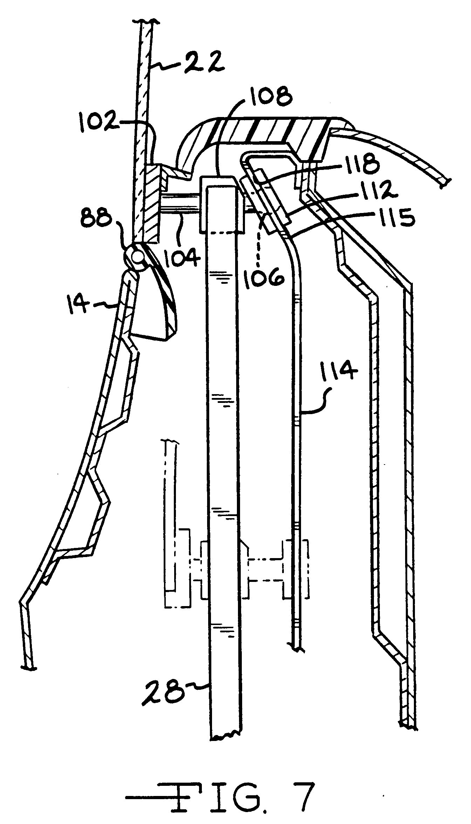

A continuous rack member 34, preferably formed of a suitable flexible plastic material which can economically manufactured, is mounted in the tracks 26 and 28. The racks 34 are of generally rectangular shape in cross section corresponding to the rectangular shape of the inner surface 29 of the tracks 26 and 28. The racks 34 are formed with transverse evenly spaced grooves 36 which cooperate to form outwardly extending teeth 38 that are located facing the continuous slots 32 in the tracks. The grooves and teeth are shown in Figure 8. A drive pinion 40 is located at the center of the door assembly along the lower edge thereof and engages the racks 34 of both tracks 26 and 28 through the slots 32. As the drive pinion 40 is rotated by a motor 41, both racks 34 are simultaneously driven longitudinally through the tracks 26 and 28. Mounting flanges 42 are attached to the ends of the two racks 34 and extend outward through the slots 32, the function of which will be described in detail below. As the drive pinion 40 is rotated, simultaneously driving the two racks 34, the mounting flanges 42 are moved longitudinally relative to the two tracks 26 and 28.

One embodiment of the structure that provides a window kick-out feature is shown in Figures 2-5. Figure 2 is a view looking toward the vehicle door assembly from the vehicle interior showing the kick-out structure at the top of the rearward track 28 with the glass 22 in the raised position.

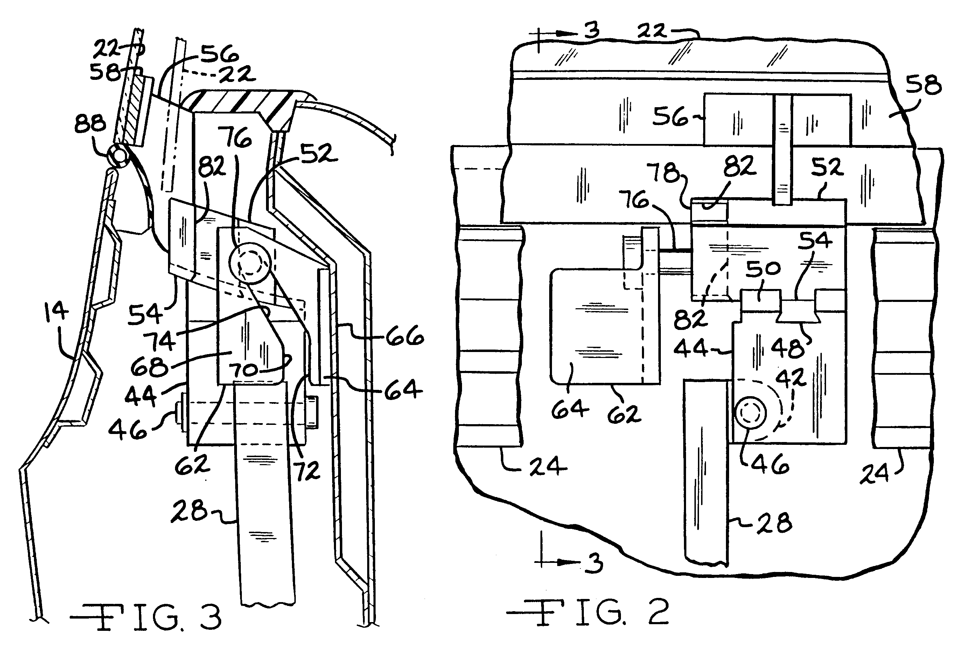

A lower dovetail slide block 44 is rotatably attached to the mounting flange 42 by a pin 46 extending through the lower dovetail block 44 and mounting flange 42. The lower dovetail block has a dovetail shaped groove or mortise 48 machined in its upper surface 50. An upper dovetail slide block 52 is positioned above lower dovetail block 44 and contains a dovetail shaped flaring tenon 54 for sliding within the mortise 48 of block 44. The mortise and tenon are directed longitudinally side-to-side relative to the vehicle door to allow the upper block to move outward as the glass is raised. A bracket 56 attaches the upper dovetail block 52 to a glass attaching bracket 58 extending along the lower edge of the glass 22. As the upper dovetail block 52 moves outward, the lower edge of the glass 22 moves outward from the phantom line position to the solid line position in Figure 3.

The dovetail mortise and tenon are curved upwardly concaved as shown in Figure 3. This curve is necessary to provide for rotation of the glass 22 about an axis along the uppermost edge of the glass 22. Accordingly, the radius of curvature of the dovetail mortise and tenon is dictated by the size of the glass 22. Alternatively, the dovetail joint can be straight, as opposed to curved, and the attachment of bracket 56 to the upper dovetail block 52 can be pivoted to allow for the rotational movement of the glass.

A cam 62 is provided to move the upper dovetail block outward as the window approaches the raised position. The cam 62 is constructed of a angle member having a mounting portion 64 attached to interior member 66 of the door assembly. A cam portion 68 extends outward from the mounting portion 64 and defines a slot 70. Slot 70 includes a generally vertical lower portion 72 which parallels the track 28 and an inclined upper portion 74 which is angled upward and outward relative to the vehicle from the vertical portion 72. A pin 76 extending from the side 78 of upper dovetail block 52 engages the slot 70 as the dovetail block 52 is raised. As the pin engages the inclined portion 74 of the slot, the pin follows the slot and moves the upper block 52 outward relative to the vehicle. This moves the lower edge of the glass 22 outward to rest upon a seal 88. Seal 88 defines the lower edge of the window opening 18 immediately above the sheet metal panel 14. A second pin, extending from the lower dovetail block 44 and engaging only the vertical portion 72 of slot 70, can be provided to give greater stability to the positioning of the glass lower edge.

Figure 4 is a view similar to Figure 3 in which the glass 22 has been lowered from the uppermost position shown in Figure 3 closing the window opening 18. The glass 22 is lowered by rotating the drive pinion 40 (Figure 1) such that the racks 34 of tracks 26 and 28 are lowered, causing the mounting flanges 42 to move downward. As mounting flanges 42 move downward, the lower 44 and upper 52 dovetail blocks move downward resulting in lowering of the glass 22. As the dovetail blocks move downward, the inclined slot 74 guides the pin 76 of the upper dovetail block inward. This results in moving the lower edge of the glass 22 inward as it begins to move downward. As the glass 22 moves downward, the lip 89 of seal 88 wipes the outer surface of the glass and seals against the glass to prevent water from entering the door assembly interior.

The face 78 of the upper dovetail block 52 contains a channel 82 which engages the exterior of track 28 when the dovetail block is in a lowered position as shown in Figures 4 and 5. The purpose of the channel 82 is to prevent relative motion between the two dovetail blocks when the glass 22 is in a lowered position where the pin 76 no longer engages slot 70. The channel 82 thus provides side-to-side stability of the glass position thereby allowing accurate placement and alignment of the glass during travel. Separate guide channels, as used in previous window regulator mechanisms to position the glass, are no longer necessary. This results in a reduction in the number of components in the door assembly and the weight of the door assembly. Identical kick-out structure is provided at both glass drive attachment locations.

Figure 6 shows a second embodiment of the sliding block dovetail kick-out mechanism shown in Figures 2-5. The cam 62 used to move the upper dovetail block outward as the window approaches the closed position has been replaced by a wedge 86 attached to the door assembly by screw 87. The wedge has an inclined surface 90 which, as viewed in Figure 6, is inclined outwardly and upwardly.

The upper dovetail block 52 has a correspondingly inclined surface 92 which engages the surface 90 of wedge 86 as the dovetail block 52 is moved upward. As the dovetail block 52 engages the wedge 86, the inclined surface forces the dovetail block to move outwardly thereby moving the glass 22 outward such that the glass lower edge is flush with the exterior surface of the door and rests upon seal 88. The surface 90 of the wedge and the engaging surface 92 of the upper dovetail block are also a curved concave upward. By curving these contact surfaces, surface contact is maintained as the upper block slides along the curved dovetail.

A spring stop comprised of a coil spring 94, is attached to the inner surface of the sheet metal panel 14 and extends inwardly toward the upper dovetail block 52. The spring 94 is of sufficient length in the uncompressed condition that the glass mounting bracket 84 attached to the dovetail block 52 will engage the end of the spring 94 simultaneously with engagement of block 52 with wedge 86. The spring 94 thus ensures continuous engagement of the inclined surfaces 92 and 90 when the glass is in the raised position. As the glass 22 is lowered, the spring 94 moves the dovetail block 52 inward thereby moving the lower edge of glass 22 inward until the channel 82 in the upper dovetail block 52 engages the track 28 as described above with respect to Figures 4 and 5.

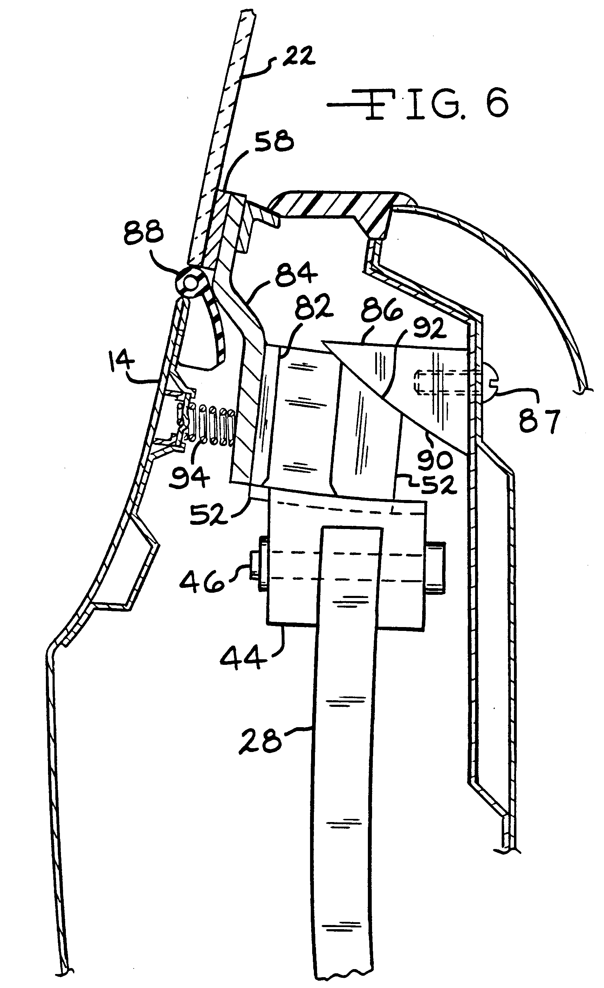

A third embodiment of structure providing the kick-out feature is shown in Figures 7-9. The glass attaching bracket 102 is attached to the inner surface of glass 22 adjacent the lower glass edge. Bracket 102, like bracket 58, can be attached to the glass by bonding, a reaction injection molding process (RIM), or the like. The glass attaching bracket 102 has integrally formed thereon push rods 104 for attaching the glass 22 to the window regulator mechanism. Two push rods 104 are used, one at or near each edge 23 and 25 of the glass 22 at the two glass drive points. The end of push rod 104 extending away from the glass 22 forms a ball 106. Push rod 104 slides through a rod guide block 108 which in turn is attached to the mounting flange 42 by a pin 110 as shown in Figure 9.

A circular button 112 having a central socket is mounted to the ball 106 of push rod 104 with a ball and socket joint which allows the button 112 to pivot about the ball 106. The outer periphery of the button 112 includes an annular groove 118. A flat guide rail 114 is positioned inwardly of the track 28 and is generally parallel to the track 28. The guide rail is a flat plate having a longitudinal slot 116. The button 112 is positioned within the slot 116 with the groove 118 engaging the edges of slot 116 in the guide rail. The upper end of the guide rail 114 is inclined outwardly at 115 as shown in Figure 7.

As the rack 34 is moved upward within the track 28, the rod guide 108 also moves upward. When the rod guide reaches the upper end of travel, the button 112 enters the inclined portion of the guide rail 114. As this occurs, the button 112 pivots around the ball 106 and moves outward sliding the push rod outward through the rod guide 108. The outward motion of the push rod moves the lower edge of the glass 22 outward such that it seats upon the seal 88.

As the window is lowered from the raised position, the button 112 follows the guide rail and moves inward thus pulling the lower edge of the glass inward off the seal 88 and into the storage cavity. The lower edge of the glass and rod guide are shown in phantom lines in Figure 7 in a lowered position.

A glass kick-out mechanism is thus provided for use with a window regulator which provides both glass guidance and glass motion without the use of separate glass guide channels. The kick-out structure moves the lower edge of the glass outward to a position flush with the vehicle exterior. The same structure used to apply forces to raise and lower the glass is also used to move the lower edge of the glass outward as the glass approaches the upper position.

## Claims

1. A window regulator mechanism (20) for a vehicle door assembly having an outer surface (14), a generally vertical window opening (18) and a storage cavity beneath the window opening, a generally vertical window glass (22) having fore and aft upright edges (23,25), a top edge and a bottom edge, said glass being movable between an upper position closing the window opening and a lower position stored within the storage cavity, the window regulator mechanism (20) comprising: drive means (34,40,42) disposed within said storage cavity and operable to move the glass (22) along a generally upright path of movement between said upper and lower positions; means (42) for attaching said drive means (34,40) to said glass (22) at two horizontally spaced locations adjacent the bottom edge of said glass so that forces are applied to the glass at said two locations for moving the glass between said upper and lower positions; and means (26,28) operatively associated with said drive means (34,40) and disposed within said storage cavity for guiding said glass (22) along said path of movement between said upper and lower positions, said path including displacement of the glass to move the glass outward toward the outer surface of the door assembly during upward movement of the glass as the glass approaches and is moved into said upper position, said guide means acting through said attaching means to guide said glass, the attaching means including at each spaced location, a first member (44) fixed to the drive means (42), a second member (56) fixed to the glass (22) and means (48, 54) coupling the first and second members (44,56) together for motion of the second member (56) relative to the first member (44), and said guide means including coacting guide (70,74) and follower (76) means acting on said second member (56), characterised in that the coacting guide (70,74) and follower (76) means are operative to move the second member (56) laterally relative to the first member (44) during upward movement of the drive means (42) as the glass approaches and is moved into said upper position to cause the bottom edge of said glass to move outwardly toward said outer surface of the door assembly whereby the glass is so displaced as to rotate generally about the top edge of the glass as the bottom edge of the glass is moved outward.

2. A window regulator mechanism according to claim 1, wherein said guide means includes an upright member (114) having a longitudinally extending slot (116) therein, said follower means including a follower (112) mounted to said second member (104) and disposed within said slot (116) for motion therein as said glass is raised and lowered, said upright member (114) and slot (116) being inclined outwardly at the upper end of said slot (116) so as to move said second member (104) and said glass bottom edge outward as said glass (22) approaches and is moved into said upper position.

3. A window regulator according to either preceding claim, wherein one of said two locations on the glass where said attaching means is attached to said glass (22) is adjacent the forward upright glass edge (23) and the other of said two locations is adjacent said aft upright glass edge (25).

4. A window regulator according to any preceding claim, wherein said drive means includes a pair of generally vertical hollow track members (26,28) disposed within said cavity, one of said track members being adjacent each upright edge (23,25) of the glass, a pair of drive members (34) each operatively associated with one of said track members for vertical sliding motion within said track members, means (41,40) for simultaneously moving both said drive members (34) vertically in the same direction; and said first members (108) attaching to said drive members (34) at said two horizontally spaced locations whereby said glass (22) is moved vertically in response to movement of said drive members.

5. A window regulator mechanism according to claim 4, wherein said second members comprise a pair of push rods (104) attached to said glass (22) and extending inwardly from said glass, one of said push rods (104) being attached to said glass at each of said two horizontally spaced locations, said push rods (104) slidably extending through drive blocks (108) comprising the first member attached to said drive members (34) so that as said drive members (34) are moved, said drive blocks (108) move said push rods (104) and said glass (22), and said guide means includes a pair of upright members (114), one adjacent each of said vertical tracks (26,28), said upright members (114) having a longitudinally extending slot (116) therein, said upright members (114) and slots (116) being inclined outwardly at the upper end of said slots (116), and a follower (112) mounted to each of said push rods (104) and disposed within said slots (116) so that as said glass (22) is raised to the upper position, said upright members (114) guide said push rods (104) and glass bottom edge outward with the push rods (104) sliding through said drive blocks (108).

## Patentansprüche

1. Fenstereinstellmechanismus (20) für eine Fahrzeugtüranordnung mit einer Außenfläche (14), einer im allgemeinen vertikalen Fensteröffnung (18) und einem Aufbewahrungshohlraum unter der Fensteröffnung, einem im allgemeinen vertikalen Fensterglas (22) mit einer vorderen senkrechten und einer hinteren senkrechten Kante (23, 25), einer Oberkante und einer Unterkante, wobei das Glas zwischen einer die Fensteröffnung schließenden oberen Stellung und einer in dem Aufbewahrungshohlraum aufbewahrten unteren Stellung bewegbar ist, welcher Fenstereinstellmechanismus (20) umfaßt: Antriebsmittel (34, 40, 42), welche in dem Aufbewahrungshohlraum angeordnet sind und so betreibbar sind, daß sie das Glas (22) längs eines im allgemeinen senkrechten Bewegungspfades zwischen der oberen und der unteren Stellung bewegen; Mittel (42) zum Befestigen der Antriebsmittel (34, 40) an dem Glas (22) an zwei horizontal beabstandeten Stellen, die an die Unterkante des Glases grenzen, so daß an den beiden Stellen Kräfte auf das Glas ausgeübt werden, welche das Glas zwischen der oberen und der unteren Stellung bewegen; und Mittel (26, 28) zum Führen des Glases (22) längs des Bewegungspfades zwischen der oberen und der unteren Stellung, welche mit den Antriebsmitteln (34, 40) wirksam verbunden sind und in dem Aufbewahrungshohlraum angeordnet sind, wobei der Pfad eine Verschiebung des Glases enthält, um das Glas während einer Aufwärtsbewegung des Glases, wenn sich das Glas der oberen Stellung nähert und in dieselbe bewegt wird, ach außen zur Außenoberfläche der Türanordnung hin zu bewegen, wobei die Führungsmittel durch die Befestigungsmittel so wirken, daß sie das Glas führen, wobei die Befestigungsmittel an jeder beabstandeten Stelle ein an den Antriebsmitteln (42) festgelegtes erstes Teil (44), ein am Glas (22) festgelegtes zweites Teil (56) und das erste und das zweite Teil (44, 56) zusammenkoppelnde Mittel (48, 54) zur Bewegung des zweiten Teils (56) relativ zum ersten Teil (44) enthalten, und wobei die Führungsmittel eine zusammenwirkende Führung (70, 74) und Mittel einer Folgeeinrichtung (76) enthalten, welche auf das zweite Teil (56) wirken, dadurch gekennzeichnet, daß die zusammenwirkende Führung (70, 74) und die Mittel einer Folgeeinrichtung (76) dazu betrieben werden, um das zweite Teil (56) während einer Aufwärtsbewegung der Antriebsmittel (42) seitlich relativ zu dem ersten Teil (44) zu bewegen, wenn sich das Glas der oberen Stellung nähert und in dieselbe bewegt wird, um zu veranlassen, daß sich die Unterkante des Glases nach außen zur Außenfläche der Türanordnung hin bewegt, wodurch das Glas derart verschoben wird, daß es im allgemeinen um die Oberkante des Glases rotiert, wenn die Unterkante des Glases nach außen bewegt wird.

2. Fenstereinstellmechanismus nach Anspruch 1, bei welchem das Führungsmittel ein senkrechtes Teil (114) mit einem darin längs verlaufenden Schlitz (116) enthält, wobei die Folgeeinrichtungsmittel eine Folgeeinrichtung (112) enthalten, welche an dem zweiten Teil (104) angebracht ist und welche in dem Schlitz (116) zur Bewegung darin, wenn das Glas angehoben und abgesenkt wird, angeordnet ist, wobei das senkrechte Teil (114) und der Schlitz (116) am oberen Ende des Schlitzes (116) nach außen geneigt sind, so daß sich das zweite Teil (104) und die Glasunterkante nach außen bewegen, wenn sich das Glas (27) der oberen Stellung nähert und in dieselbe bewegt wird.

3. Fenstereinstelleinrichtung nach einem der vorhergehenden Ansprüche, bei welchem die eine der beiden Stellen an dem Glas, an welchen die Befestigungsmittel an dem Glas (22) befestigt sind, an die vordere senkrechte Glaskante (23) grenzt, und bei welchem die andere der beiden Stellen an die hintere senkrechte Glaskante (25) grenzt.

4. Fenstereinstelleinrichtung nach einem der vorhergehenden Ansprüche, bei welchem das Antriebsmittel enthält: ein Paar von im allgemeinen vertikalen Hohlschienenteilen (26, 28), welche in dem Hohlraum angeordnet sind, wobei eines der Schienenteile an jede senkrechte Kante (23, 25) des Glases grenzt, ein Paar von Antriebsteilen (34), wobei jedes mit einem der Schienenteile zur vertikalen Gleitbewegung in den Schienenteilen wirksam verbunden ist, Mittel (41, 40) zum gleichzeitigen vertikalen Bewegen der beiden Antriebsteile (34) in derselben Richtung; und die ersten Teile (108), welche an den Antriebsteilen (34) an den beiden horizontal beabstandeten Stellen befestigt sind, wodurch das Glas (22) in Reaktion auf eine Bewegung der Antriebsteile vertikal bewegt wird.

5. Fenstereinstellmechanismus nach Anspruch 4, bei welchem die zweiten Teile ein Paar von Stößeln (104) umfassen, welche an dem Glas (22) befestigt sind und sich von dem Glas nach innen erstrecken, wobei einer der Stößel (104) an dem Glas an jeder der beiden horizontal beabstandeten Stellen befestigt ist, wobei sich die Stößel (104) durch Antriebsblöcke (108) hindurch verschiebbar erstrecken, welche das an den Antriebsteilen (34) befestigte erste Teil umfassen, so daß die Antriebsblöcke (108) die Stößel (104) und das Glas (22) bewegen, wenn die Antriebsteile (34) bewegt werden, und bei welchem das Führungsmittel enthält: ein Paar von senkrechten Teilen (114), wobei eines an jede der vertikalen Schienen (26, 28) grenzt, wobei die senkrechten Teile (114) einen längs verlaufenden Schlitz (116) darin aufweisen, wobei die senkrechten Teile (114) und die Schlitze (116) am oberen Ende der Schlitze (116) nach außen geneigt sind, und eine Folgeeinrichtung (112), die an jedem der Stößel (104) angebracht ist und in den Schlitzen (116) angeordnet ist, so daß die senkrechten Teile (114) die Stößel (104) und die Glasunterkante nach außen führen, wenn das Glas (22) in die obere Stellung angehoben wird, wobei die Stößel (104) durch die Antriebsblöcke (108) gleiten.

## Revendications

1. Mécanisme de lève-glace (20) pour un ensemble de porte de véhicule qui comprend une surface extérieure (14), une ouverture de fenêtre (18) généralement verticale et une cavité de rangement endessous de l'ouverture de fenêtre, une glace (22) généralement verticale qui présente des bords verticaux antérieur et postérieur (23, 25), un bord supérieur et un bord inférieur, ladite glace pouvant être déplacée entre une position haute dans laquelle elle ferme l'ouverture de fenêtre et une position basse dans laquelle elle est rangée dans la cavité de rangement, le mécanisme de lève-glace (20) comprenant :
- un moyen d'entraînement (34, 40, 42) placé à l'intérieur de ladite cavité de rangement et utilisable pour déplacer la glace (22) suivant un trajet de déplacement généralement vertical entre lesdites positions haute et basse,
- des moyens (42) pour fixer ledit moyen d'entraînement (34, 40) à ladite glace (22) en deux emplacements horizontalement espacés, adjacents au bord inférieur de ladite glace, de telle sorte que des efforts sont appliqués à ladite glace au niveau desdits deux emplacements pour déplacer la glace entre lesdites positions haute et basse, et
- des moyens (26, 28) associés de façon fonctionnelle auxdits moyens d'entraînement (34, 40) et disposés à l'intérieur de ladite cavité de rangement pour guider ladite glace (22) le long dudit trajet de déplacement entre lesdites positions haute et basse, ledit trajet incluant un mouvement de la glace pour déplacer la glace vers l'extérieur, en direction de la surface extérieure de l'ensemble de porte, pendant le mouvement ascendant de la glace lorsque la glace approche de ladite position haute et vient dans cette position, ledit moyen de guidage agissant par l'intermédiaire desdits moyens de fixation pour guider ladite glace, lesdits moyens de fixation comprenant, au niveau de chaque emplacement espacé, un premier élément (44) fixé au moyen d'entraînement (42), un second élément (56) fixé à la glace (22) et des moyens (48, 54) qui accouplent les premier et second éléments (44, 56) en vue d'un déplacement du second élément (56) par rapport au premier élément (44), et ledit moyen de guidage comprenant un élément guide (70, 74) et un élément suiveur (76) à action conjointe qui agissent sur ledit second élément (56),
caractérisé en ce que l'élément guide (70, 74) et l'élément suiveur (76) à action conjointe servent à déplacer le second élément (56) latéralement par rapport au premier élément (44) pendant le mouvement ascendant du moyen d'entraînement (42) lorsque la glace approche de ladite position haute et vient dans cette position, pour amener le bord inférieur de ladite glace à se déplacer vers l'extérieur, en direction de ladite surface extérieure de l'ensemble de porte de telle sorte que la glace est déplacée de manière à tourner généralement autour du bord supérieur de la glace quand le bord inférieur de la glace est déplacé vers l'extérieur.

2. Mécanisme de lève-glace selon la revendication 1, dans lequel ledit moyen de guidage comprend un élément vertical (114) dans lequel se trouve une fente (116) s'étendant longitudinalement, ledit élément suiveur comprenant un dispositif suiveur (112) monté sur ledit second élément (104) et disposé dans ladite fente (116) pour s'y déplacer lorsque ladite glace est abaissée et relevée, ledit élément vertical (114) et la fente (116) étant inclinés vers l'extérieur au niveau de l'extrémité supérieure de ladite fente (116) de manière à déplacer ledit second élément (104) et ledit bord inférieur de la glace vers l'extérieur lorsque ladite glace (22) approche de ladite position haute et vient dans cette position.

3. Mécanisme de lève-glace selon l'une ou l'autre des précédentes revendications, dans lequel l'un desdits deux emplacements sur la glace au niveau desquels ledit moyen de fixation est fixé à ladite glace (22) est adjacent au bord antérieur vertical (23) de la glace et l'autre desdits deux emplacements est adjacent audit bord postérieur vertical (25) de la glace.

4. Mécanisme de lève-glace selon l'une quelconque des précédentes revendications, dans lequel ledit moyen d'entraînement comprend une paire d'éléments creux formant rails (26, 28), généralement verticaux, placés à l'intérieur de ladite cavité, l'un desdits éléments formant rails étant adjacent à chaque bord vertical (23, 25) de la glace, une paire d'organes d'entraînement (34) associés chacun de façon opérationnelle à l'un desdits éléments formant rails en vue d'un mouvement de glissement vertical à l'intérieur desdits éléments formant rails, des moyens (41, 40) pour déplacer simultanément les deux organes d'entraînement (34) verticalement dans le même sens, et dans lequel lesdits premiers éléments (108) sont fixés auxdits organes d'entraînement (34) au niveau desdits deux emplacements horizontalement espacés de telle sorte que ladite glace (22) est déplacée verticalement en réponse au mouvement desdits organes d'entraînement.

5. Mécanisme de lève-glace selon la revendication 4, dans lequel lesdits seconds éléments comprennent une paire de tiges de poussée (104) fixées à ladite glace (22) et s'étendant vers l'intérieur depuis ladite glace, l'une desdites tiges de poussée (104) étant fixée à ladite glace en chacun desdits deux emplacements horizontalement espacés, lesdites tiges de poussée (104) traversant de façon coulissante des blocs d'entraînement (108) constituant le premier élément fixé auxdits organes d'entraînement (34) de telle sorte que lorsque lesdits organes d'entraînement (34) sont déplacés, lesdits blocs d'entraînement (108) déplacent lesdites tiges de poussée (104) et ladite glace (22), et ledit moyen de guidage comprend une paire d'éléments verticaux (114), un adjacent à chaque rail vertical (26, 28), lesdits éléments verticaux (114) comportant une fente (116) qui s'étend longitudinalement, lesdits éléments verticaux (114) et lesdites fentes (116) étant inclinés vers l'extérieur au niveau de l'extrémité supérieure desdites fentes (116), et un dispositif suiveur (112) fixé à chaque tige de poussée (104) et disposé à l'intérieur desdites fentes (116) de telle sorte que lorsque ladite glace (22) est relevée vers ladite position haute, lesdits éléments verticaux (114) guident lesdites tiges de poussée (104) et le bord inférieur de la glace vers l'extérieur avec les tiges de poussée (104) qui coulissent à travers lesdits blocs d'entraînement (108).
